# FASCICULE DE BREVET EUROPEEN

(11) **EP 2 394 105 B1**
(45) Date de publication et mention de la délivrance du brevet: **11.06.2014**
(21) Numéro de dépôt: 09797129.5
(22) Date de dépôt: 30.11.2009
(51) Int. Cl.: H01L 31/042, F24J 2/52, F24J 2/46

(54) **PIÈCE DE MONTAGE POUR MODULES PHOTOVOLTAÏQUES, DISPOSITIF DE MONTAGE ET STRUCTURE DE BÂTIMENT L'INCORPORANT**
INSTALLATIONSTEIL FÜR FOTOVOLTAISCHE MODULE, INSTALLATIONSVORRICHTUNG UND DIESE UMFASSENDE BAUSTRUKTUR
INSTALLATION PART FOR PHOTOVOLTAIC MODULES, INSTALLATION DEVICE, AND BUILDING STRUCTURE COMPRISING SAME

(30) Priorité: 06.02.2009 PT 10440809; 19.03.2009 FR 0901288
(43) Date de publication de la demande: 14.12.2011
(73) Titulaire: Sun'R, 75009 Paris (FR); Modeling Solutions LDA, 3740-264 Sever Do Vouga (PT)
(72) Inventeur: NOGIER, Antoine, F-75017 Paris (FR); MOYNAT, Christophe, F-38121 CHONAS L'ABALLAN (FR); RODRIGUES, Joaquim, Jorge, Leal, P-3070-731 Praia De Mira (PT); DA SILVA MATOS, Sergio, Francisco, P-3740 Sever Do Vouga (PT)
(74) Mandataire: Kurtz, Laurent Charles Edmond
(86) Numéro de dépôt international: PCT/FR2009/052345
(87) Numéro de publication internationale: WO 2010/089469

(56) Documents cités:
- EP-A2- 1 775 777
- FR-A1- 2 399 510
- FR-A2- 2 408 018
- JP-A- 11 107 472

## Description

### Domaine de l'invention

La présente invention concerne l'intégration en toiture de modules photovoltaïques et en particulier un système d'étanchéité, empêchant toute pénétration d'eau et permettant, de récupérer celle-ci.

### Etat de la technique

L'utilisation de modules photovoltaïques dans le domaine des énergies alternatives est de plus en plus répandue. Il s'agit, essentiellement, d'aligner un ou plusieurs modules composés de cellules photovoltaïques, de façon à obtenir la plus grande superficie utile, donc une plus grande surface d'exposition solaire, aboutissant à une plus grande production d'énergie.

Certaines structures entourent les modules d'une moulure en caoutchouc, polymère ou matériau équivalent.

Ce qui veut dire qu'il n'existe pas le moindre système d'étanchéité entre les modules et que les eaux pluviales s'infiltrent entre les joints et sous les plaques. A terme, l'eau endommage toute la structure qui doit être entretenue régulièrement. Sans compter que les eaux pluviales ne sont pas récupérées.

D'autre part, les saletés stagnantes finissent par obstruer l'écoulement des eaux.

L'utilisation du caoutchouc présente un inconvénient manifeste : ne s'agissant pas d'une surface ni d'un matériau naturellement exposés aux variations climatiques, le caoutchouc se détériore, sèche, éclate, et finit par se décoller complètement.

Il s'avère ainsi nécessaire d'entretenir régulièrement les joints entre les plaques des modules.

D'autre part, il se produit des infiltrations d'eau tout au long du système, qui contribuent à la corrosion de tous les éléments métalliques.

Enfin, cette solution ne permet pas de récupérer l'eau. C'est là un aspect très important car dans le cadre des énergies alternatives, la question de la conservation des ressources et de leur utilisation scrupuleuse est très présente.

En effet, outre les variables de prix et de qualité d'un produit, le consommateur actuel tient de plus en plus compte d'un autre élément très important : la préservation de l'environnement.

Des systèmes présentant des inconvénients similaires sont décrits dans les demandes de brevet EP 2 023 402, EP 0 905 795 et JP-A-11107472.

### But de l'invention

L'invention est née du souci de trouver une solution applicable à tous les systèmes de modules photovoltaïques existant sur le marché et permettant de se passer des caoutchoucs habituels utilisés comme joints d'étanchéité.

Dans le même temps, il s'agit de concevoir un système facile, rapide et commode à monter et à démonter.

Elle vise, plus généralement, à proposer un système palliant les inconvénients précités et conduisant à d'autres avantages.

### Exposé et avantages de l'invention

L'invention a, pour objet une pièce de montage de modules photovoltaïques au sein d'une toiture, définissant une gouttière destinée à être orientée dans le sens des pannes. Cette pièce a une configuration globalement en forme de U, dont l'une des branches latérales est prolongée par un retour s'étendant vers la branche opposée pour former un moyen d'accrochage pour un premier module photovoltaïque. Puis, entre l'extrémité libre du retour et ladite branche opposée se trouve un logement permettant d'intégrer un second module placé en butée verticalement contre le premier module.

La structure a également une première pièce de montage destinée à être fixée à la toiture dans le sens de la pente. Cette pièce possède deux parois latérales, créant ainsi une rigole et servant de surface d'appui pour les deux modules photovoltaïques adjacents horizontalement. Cette pièce sert de surface d'appui à la pièce transversale (décrite dans le premier paragraphe) et permet l'écoulement de l'eau jusqu'à la gouttière du bâtiment.

Il ressort que le système est facile et rapide à monter. Il se compose d'un nombre réduit de pièces et se dispense du recours aux caoutchoucs traditionnels contre les infiltrations d'eau, tout en pouvant acheminer cependant les eaux pluviales pour les récupérer.

Le système inventé est modulaire ; il se présente, en pratique, sous la forme d'un kit de pièces simples à monter et à démonter en suivant un séquençage. Il assure une jonction hermétique de tous les éléments et empêche l'eau de s'infiltrer. Il peut, dans le même temps, récupérer des eaux pluviales qui coulent le long des surfaces exposées des modules.

L'invention fait avantageusement, appel à deux sous-systèmes complémentaires, l'un intermédiaire et l'autre en extrémité, particulièrement appropriés aux systèmes de modules photovoltaïques existant sur le marché. Ainsi, l'un des sous-systèmes est utilisé dans les zones de joints le long de la surface des modules et l'autre sous-système dans les zones périphériques.

Les deux sous-systèmes sont composés d'un nombre réduit de pièces et sont similaires entre eux (à l'exception de deux unités).

Le premier sous-système d'étanchéité - l'intermédiaire - assure la jonction longitudinale et transversale entre les modules, et le deuxième sous-système - celui de l'extrémité - assure l'étanchéité sur les rebords extérieurs des modules.

### Dessins

D'autres caractéristiques et avantages apparaissent à la lumière de la description qui suit (description donnée à titre d'exemple non limitatif) en référence aux dessins sur lesquels:
- la figure 1 représente une vue schématique avec coupe partielle du sous-système intermédiaire,
- la figure 2 représente une vue schématique avec coupe partielle du sous-système d'extrémité (à appliquer sur les rebords extérieurs de l'ensemble de modules photovoltaïques),
- la figure 3 montre une vue schématique de l'extrémité d'une pièce pliée qui sert, simultanément, d'appui aux modules photovoltaïques et de glissière transversale de conduite de l'eau vers les gouttières longitudinales,

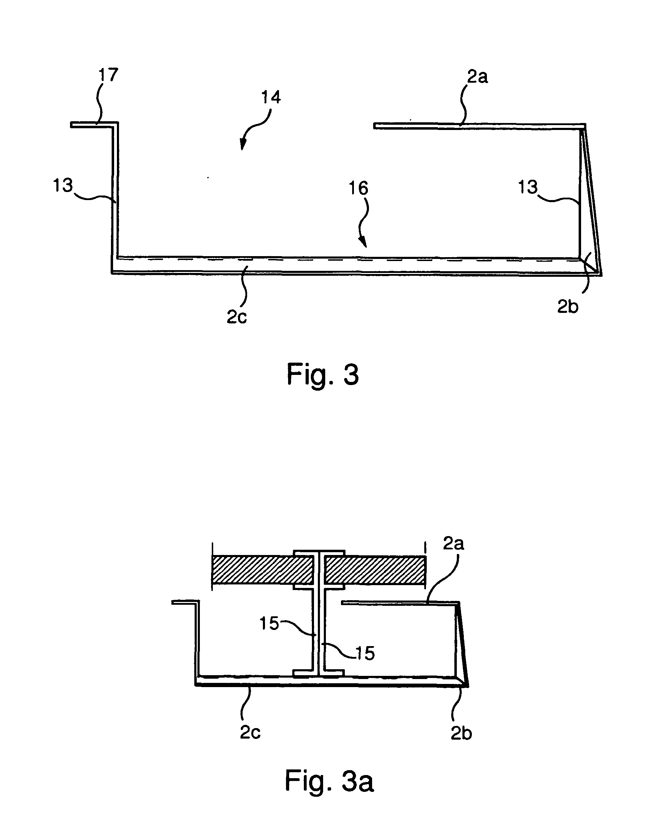

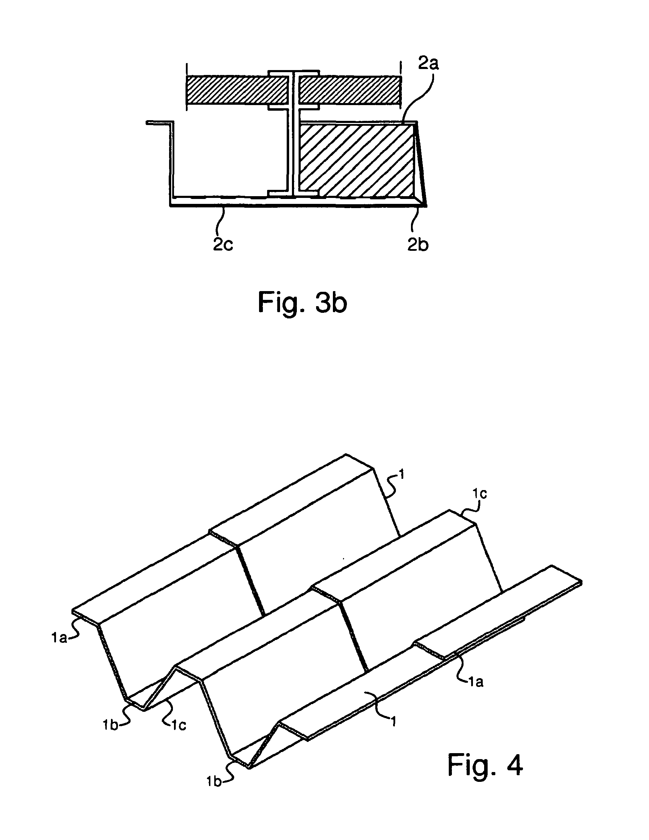

- les figures 3-a et 3-b représentent la pièce de la figure 3 (glissière transversale) en détaillant son pliage qui permet sa coopération avec les modules représentés schématiquement en coupe,
- la figure 4 représente une vue schématique en perspective de deux pièces pliées qui servent de gouttière longitudinale aux modules,

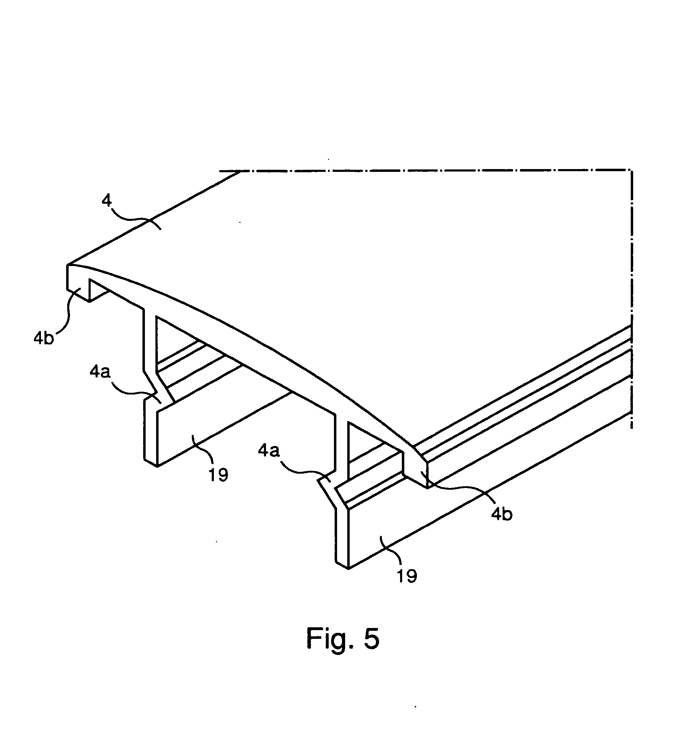

- la figure 5 montre une vue schématique partielle en perspective d'une pièce servant de faîte et permettant également d'isoler le système d'étanchéité (placée longitudinalement sur les joints des modules),

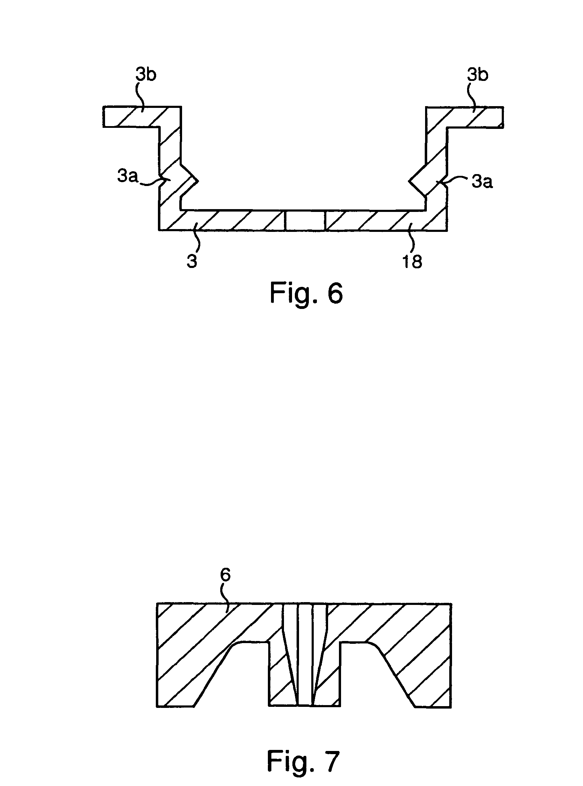

- la figure 6 représente une vue schématique en coupe d'une pièce de fixation du faîte et des modules,
- la figure 7 représente une vue schématique en coupe d'une pièce qui se place sur le dos de la gouttière et qui aide à fixer tout le système,

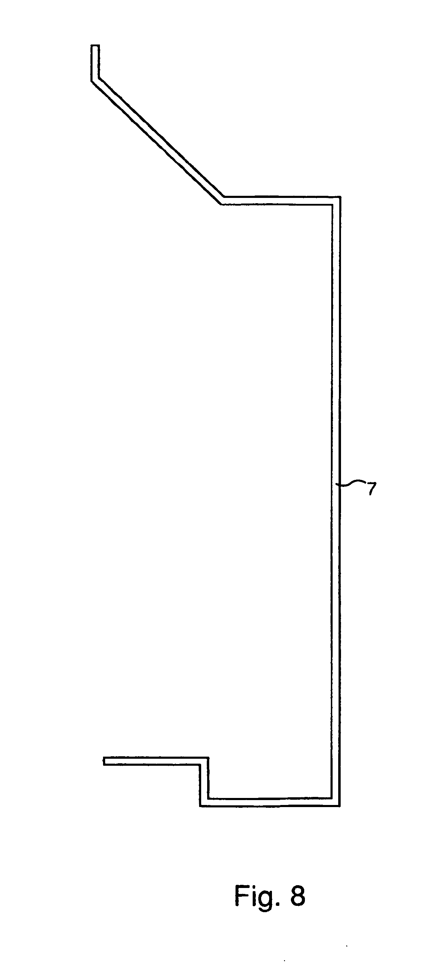

- la figure 8 représente une vue schématique de l'extrémité d'une pièce utilisée pour le sous-système d'étanchéité qui se place aux extrémités et sert de bordure,

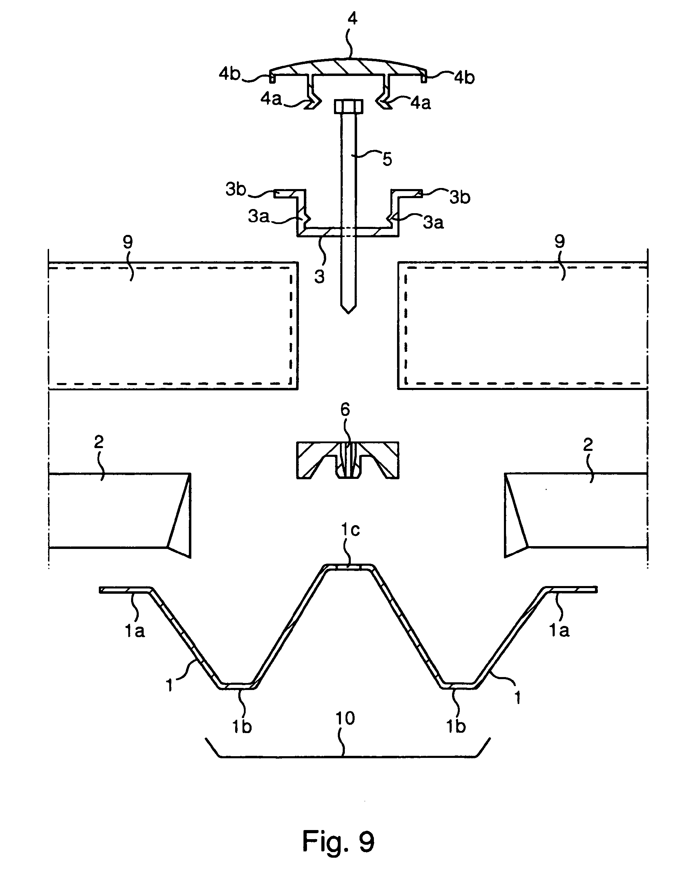

- la figure 9 montre une vue schématique partielle en éclatée avec coupe partielle de tout le sous-système intermédiaire d'étanchéité, y compris le détail du procédé de montage,

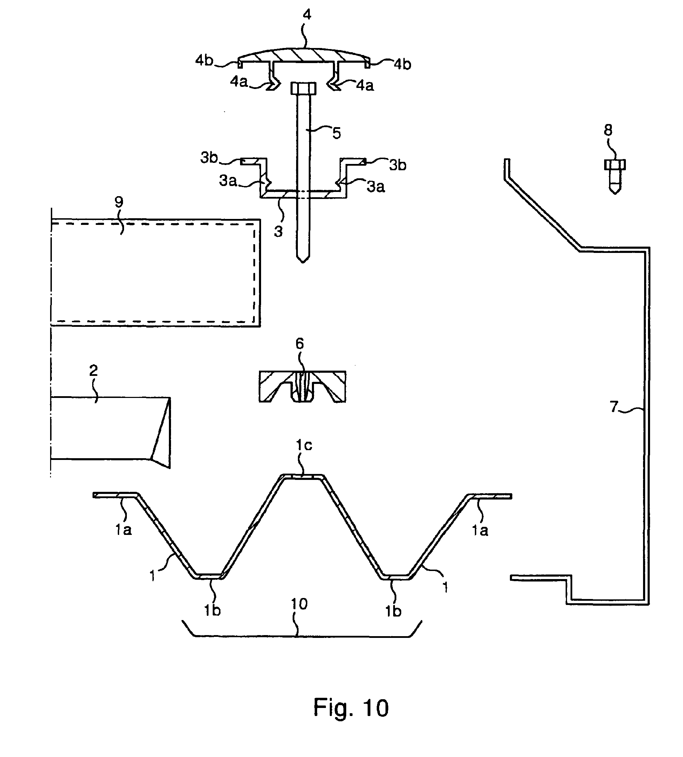

- la figure 10 montre une vue schématique partielle en éclatée avec coupe partielle de tout le sous-système d'étanchéité placé à l'extrémité, y compris le détail du procédé de montage,

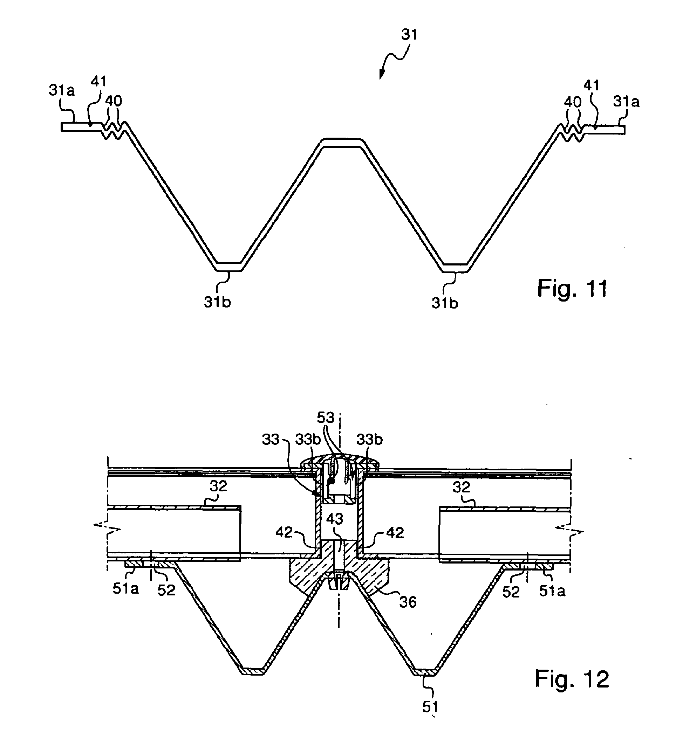

- la figure 11 montre une vue schématique de l'extrémité d'une gouttière longitudinale équipée de cannelures anti-capillarité; et
- la figure 12 représente une vue schématique partielle en coupe transversale du sous-système intermédiaire selon un autre mode de réalisation de la présente invention.

### Description du mode de réalisation de l'invention

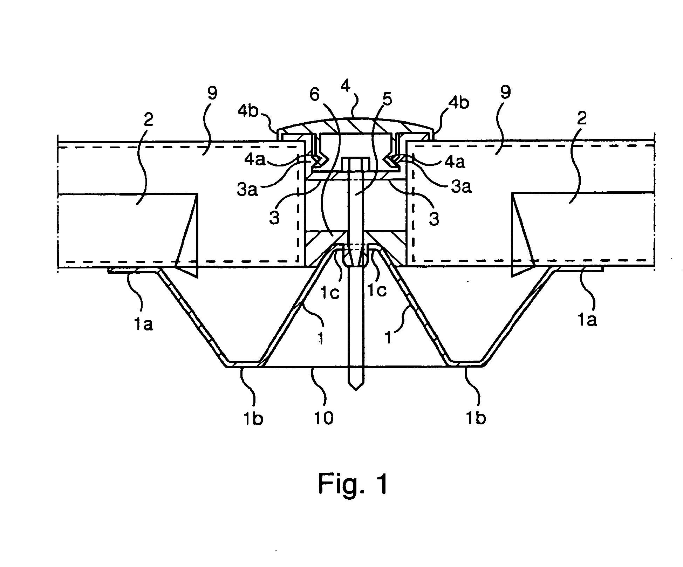

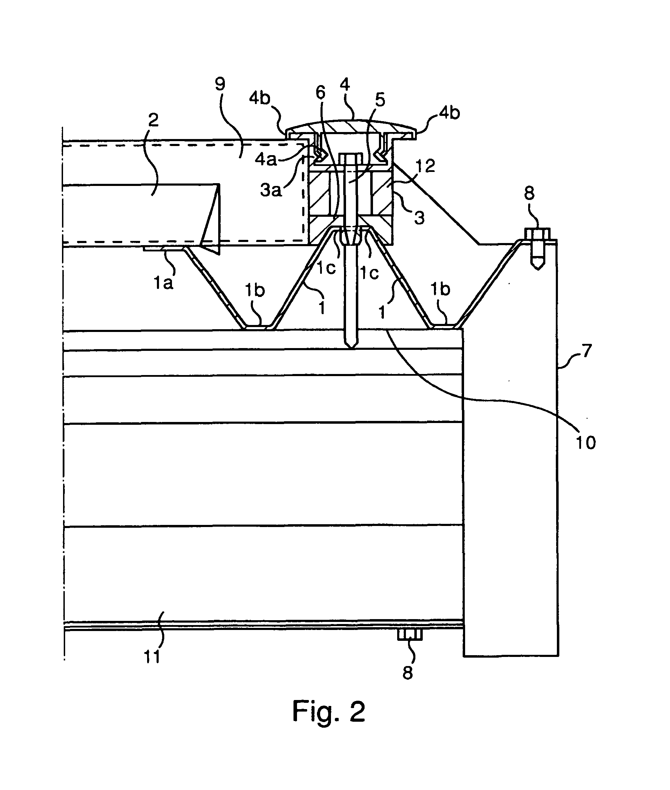

L'invention proposée selon ce mode de réalisation est composée de deux ensembles de pièces que nous nommerons « sous-systèmes », semblables entre eux et partageant la plupart des pièces constituantes. La seule différence se situant dans leur finalité concrète, à savoir une utilisation,
- soit dans les zones intermédiaires (figure 1) - zones de jonction entre les différents modules,
- soit dans les zones périphériques ou d'extrémité (figure 2) - zones périphériques ou de rebord -, sachant que le deuxième sous-système comporte notamment la pièce supplémentaire de la figure 8.

Les systèmes d'étanchéité selon l'invention se présentent sous la forme de kits de pièces qui se montent et se démontent séquentiellement.

Les figures 9 et 10 représentent, en détail, les ensembles de pièces constituant des systèmes d'étanchéité à utiliser, respectivement dans les zones intermédiaires et d'extrémité; elles permettent de comprendre le séquençage des opérations de montage ou de démontage.

Comme on peut le voir notamment sur la figure 1, les modules photovoltaïques 9 s'appuient sur des pièces de montage 2, également appelées glissières transversales (en raison du fait qu'elles guident le mouvement des modules au montage, et en référence aux côtés correspondants des modules) qui, à leur tour, sont supportées par la gouttière longitudinale.

Les eaux s'écoulent dans les glissières transversales et, à partir de celles-ci, vers les gouttières, et sont avantageusement récupérées ensuite.

Des pièces 1 formant les gouttières sont placées en les superposant (chevauchement sur une partie de leur longueur comme le montre la figure 4) dans le sens de la pente de la toiture de façon à permettre l'écoulement et l'étanchéité. Cette solution permet également une meilleure adéquation à la dimension des modules: plus le module est grand et plus le nombre d'unités à superposer est faible.

La figure 10 montre l'ensemble de pièces à utiliser dans le sous-système d'étanchéité des extrémités. La seule différence, par rapport au sous-système des zones intermédiaires (figure 1), est le rebord extérieur, réalisé dans une pièce métallique 7 pliée avec les angles appropriés et une cale en forme de manchon 12 (réalisée en matière non-métallique, telle que du polytétrafluoréthylène (Teflon®), du polypropylène, ou du polyamide). Il peut y en avoir plusieurs superposées.

Simplement, à titre indicatif, on notera que le système d'étanchéité proposé (meilleur mode de réalisation) privilégie l'aluminium, étant donné les caractéristiques de durabilité, de malléabilité et de faible poids de ce métal.

Un des objectifs de l'invention proposée est de capter l'eau qui tombe sur les modules.

Ainsi, l'utilisation d'une gouttière est nécessaire : il s'agit d'un élément ayant un pliage adéquat, composée de pièces superposées dans le sens de la pente, dont la fonction est non seulement de supporter les modules qui s'appuient sur ses rebords extérieurs 1-a pour en permettre la fixation, mais aussi, de servir de réceptacle et de conduite pour l'eau récupérée, étant donné les dépressions 1-b qu'elle possède; sachant que la gouttière peut par superposition de pièces se prolonger sur toute la longueur voulue. Ainsi, l'eau recueillie peut être évacuée par gravité au moyen de la gouttière sans atteindre la charpente de la toiture (fonction d'étanchéité) et avantageusement récupérée en vue d'être utilisée, par exemple pour de l'arrosage.

Les glissières transversales 2 conduisent l'eau vers les gouttières longitudinales. Les premières glissières s'appuyant sur les plates-formes latérales 1-a des secondes.

Ces glissières transversales 2 sont placées entre la gouttière et le module photovoltaïque. Leur configuration empêche la saleté de s'accumuler, de façon à ce que seule l'eau circule.

En effet, tel que le montrent les figures 3-a et 3-b (respectivement pour un sous-système intermédiaire et un sous-système d'extrémité), l'angle de pliage de la pièce permet à celle-ci de s'emboîter avec un module et d'empêcher l'entrée de poussières ou de la saleté. Les angles de pliage d'évasement en 2-b et 2-c empêchent que se produise l'indésirable « effet de goutte » entre la glissière et la gouttière. On notera à cet égard que les modules photovoltaïques sont du genre de ceux décrits par exemple dans la demande DE 202006003475U1, avec un cadre à profil globalement en U, portant une plaque de cellules photovoltaïques.

Les glissières transversales sont répétées au fur et à mesure que l'on ajoute un module, pour produire l'écoulement des eaux vers la gouttière et dans le sens du rebord frontal du système de modules.

A la figure 5 est montrée une baguette formant un cache, également appelé faîte longitudinal 4.

Le faîte, ici en aluminium, est la bordure visible du système d'étanchéité placée le long du cadre des modules, en couvrant ces derniers et en formant un assemblage hermétique avec les pièces situées en-dessous (figures 6 et 7). Le faîte a la configuration d'un profilé allongé, bombé sur le dessus de façon à obtenir une meilleure finition, plus ergonomique et à vocation esthétique.

Le système d'emboîtement et de serrage constitue l'un des aspects de l'invention. Le procédé de fixation est le résultat conjugué du recours à des systèmes conventionnels impliquant l'utilisation de vis 5, ici en acier inoxydable, et à la création de pièces spécifiques à savoir la pièce de la figure 6 et la pièce de la figure 7.

La pièce ou mors 3 de la figure 6 est placée sous le faîte par emboîtement. Cette pièce, en matériau non métallique, a la configuration appropriée à son assemblage avec les rebords du faîte. Ce dernier comporte en effet deux rebords ou pattes 4-a qui se projettent dans le sens opposé à sa surface extérieure. Ces rebords ont un angle de pliage adéquat pour leur assemblage aux saillies de la pièce d'emboîtement de la figure 6. En effet, cette pièce d'emboîtement comporte deux saillies 3-a agencées pour se projeter dans le sens des rebords 4a du faîte 4. Ces saillies 3a font un angle qui permet d'emboîter correctement le faîte. Il suffit d'exercer une pression sur les deux pièces (faîte et pièce d'emboîtement) pour assurer leur jonction.

La pièce 6 de la figure 7 complète le système de serrage et de fixation. Cette pièce est fabriquée en matériau non métallique, tel que du Teflon®, du polypropylène ou du polyamide. Sa configuration fait apparaître une dépression dans la zone inférieure, permettant de la monter sur le dos 1-c de la gouttière longitudinale avec complémentarité de formes.

Cette pièce est trouée en son centre, là où passe la vis 5. Le trou est conique et formé de façon à permettre l'isolation complète de la vis, en évitant ainsi le contact avec les éléments métalliques. Ainsi, en plaçant la vis, la partie conique s'ouvre de façon à améliorer la butée contre le rebord inférieur du trou de passage du pied de cette pièce, ménagé dans la gouttière.

Cette jonction permet un serrage hermétique des systèmes d'étanchéité et permet d'exercer via la vis 5, un couple de serrage entre la pièce 6 et la pièce 1, assurant le maintien de la pièce 6 contre la pièce 1 et ainsi la stabilité des panneaux photovoltaïques.

Ce système de fixation et de serrage empêche en outre la corrosion galvanique («l'effet de pile» qui se produit par contact entre l'aluminium et l'acier). En effet, les éléments métalliques du système de fixation et de serrage ne se touchent pas grâce à l'assemblage entre le faîte 4 et l'élément de fixation 3, et du recours à la pièce de la figure 7 mettant en oeuvre un matériau non métallique.

Enfin, tout le système est fixé aux pannes 11 de la toiture au moyen de vis auto-perforantes, sachant qu'il est recommandé d'interposer des pièces en matière plastique 10 de façon à ce que la surface de la gouttière ne repose pas directement sur le métal (en évitant ainsi «l'effet de pile») mais sur un matériau isolant. Ces pièces 10 sont munies d'une bande adhésive pour leur fixation aux pannes 11.

De cette façon, même les bruits métalliques sont éliminés ou quasiment inexistants, étant donné que les éléments ou structures en métal ne se touchent pas ou pratiquement pas entre eux.

Les faîtes 4, quant à eux, comportent des rebords extérieurs 4-b sur toute leur longueur qui, après fixation, se retrouvent en tension et en contact avec la surface utile des modules. De cette façon, on empêche l'eau de pénétrer dans les joints longitudinaux.

Les faîtes sont placés longitudinalement à chacun des sous-systèmes d'étanchéité, accompagnent et isolent l'ensemble des pièces qui les composent.

Enfin, la pièce 7 de bordure latérale extérieure (voir notamment figure 8) est uniquement utilisée dans le sous-système d'étanchéité d'extrémité (voir figure 2), sur les côtés du panneau, afin de servir de bordure extérieure.

Le système modulaire est représenté plus en détail figures 9 et 10. Il s'agit d'un système modulaire dont le procédé de montage est séquencé.

Les pièces d'isolation 10 sont appliquées en premier lieu sur les pannes 11 de la toiture d'une structure de bâtiment. Ensuite, les gouttières longitudinales qui vont supporter les glissières transversales 2 sont préparées (perçage des trous, le cas échéant, et mise en place par encliquetage dans ces trous des pièces 6, par exemple à raison d'une par panne et de deux entre les pannes) puis sont alignées sur les pièces, parallèlement entre elles.

Ces glissières viendront reposer sur les plates-formes latérales 1-a des gouttières longitudinales sur lesquelles reposent, à leur tour, les modules 9.

Individuellement, chacune de ces pièces 1 comporte en effet des dépressions 1-b et des petites plates-formes périphériques se projetant vers l'extérieur 1-a ainsi qu'une plate-forme centrale ou dos 1-c.

Les dépressions reçoivent les eaux qui s'écoulent des glissières transversales 2. Les plates-formes latérales 1-a serviront également d'appui aux rebords des modules solaires 9. Leur dos 1-c est destiné à servir au serrage avec les éléments qui leur seront superposés.

La pièce 2 de la figure 3 est une pièce pliée dans le sens de la longueur, qui sert de gouttière transversale et s'appuie sur les plates-formes périphériques 1-a d'une pièce 1 inférieure (figures 1 et 2) par où s'écoule l'eau recueillie. Celle-ci pouvant être ensuite collectée en bas de toiture par un système de récupération classique, du genre gouttière et récupérateur d'eaux de pluie.

Les gouttières longitudinales sont ensuite fixées aux pannes au moyen de vis auto-perforantes puis les glissières transversales sont posées les unes après les autres en vue de recevoir successivement les modules 9. Seules celles du bas de la toiture sont fixées aux gouttières longitudinales, ici par vissage, les autres étant immobilisées ultérieurement grâce à la fixation par serrage des modules 9 aux gouttières longitudinales.

Les modules photovoltaïques sont alors mis en place par accrochage sur les retours 2a de leurs formes en U des côtés transversaux supérieurs (vu dans le sens de la pente de la toiture) et engagement de leurs côtés transversaux inférieurs dans les logements délimités par les extrémités libres des retours et les branches en regard des U que forment ces glissières transversales 2, en butée jointive contre les côtés transversaux supérieurs des panneaux adjacents verticalement. Après installation définitive, les cotés transversaux des modules photovoltaïques adjacents verticalement sont également en butée avec les retours 2a.

Il est ainsi réalisé un système d'assemblage transversal particulièrement simple à mettre en oeuvre et garantissant en outre l'étanchéité sans avoir à utiliser un joint d'étanchéité en caoutchouc ou matériau similaire.

Une fois la gouttière transversale 2 et les modules 9 installés, on passe à la phase de serrage et de fixation des sous-systèmes : au cours de cette phase, le faîte 4 est aligné longitudinalement sur les joints des modules (fentes entre modules) et va s'accoupler hermétiquement aux pièces d'emboîtement 3 dont les saillies 3-a ont la forme adéquate pour accueillir les saillies correspondantes 4-a du faîte.

Le faîte comporte des rebords 4-b qui se projettent perpendiculairement à sa surface supérieure dans la direction des saillies des pièces d'emboîtement 3-a, sachant que ces pièces 3 et 4 se positionnent de façon à être orientées en sens opposés.

L'étanchéité complète est accrue étant donné que les saillies du faîte 4-a et de son support 3-a ont des angles adéquats, de façon à assurer leur jonction après la tension exercée par le faîte, sachant que l'efficacité de la jonction est parachevée par le serrage effectué en recourant à des vis 5 qui se projettent depuis la pièce 3 jusqu'à la structure ou dos de la gouttière 1-c, où est montée la pièce de serrage de la figure 7, permettant ainsi de serrer fermement tout le système.

Cette phase de serrage est effectuée en pratique avant la mise en place du faîte, par installation des cales 12 sur les gouttières longitudinales le long des rives et des pièces ou mors 3, le long de ces mêmes rives et dans les fentes entre panneaux horizontalement adjacents, à l'emplacement des pièces 6, à raison, par exemple, de deux entre 2 pannes. Le serrage est alors réalisé au moyen de la vis 5.

Le serrage va également permettre aux rebords de la pièce longitudinale formant faîte 4-b d'être joints convenablement à la surface des modules. Ainsi, l'eau recueillie est uniquement celle qui s'introduit entre les jonctions transversales (en se précipitant dans les glissières correspondantes pour être ensuite conduite vers les gouttières longitudinales).

Tel qu'il est décrit, le procédé de fixation se fait sans effort et est exempt de friction et de bruits métalliques.

Pour le sous-système d'étanchéité à utiliser aux extrémités (figures 2 et 9), la modification se situe au niveau de l'utilisation des cales 12 et d'une pièce pliée 7 qui assure la finition extérieure, en ayant recours ici à une fixation par vissage de ladite pièce sur au moins une plate-forme latérale 1-a d'une pièce 1 formant la gouttière longitudinale et au moins une des pannes 11. Des vis 8 utilisées pour ce faire sont notamment représentées sur la figure 2. Il est à noter à cet égard que la pièce 7, telle que représentée sur la figure 10 n'a pas encore été percée en vue de recevoir le ou les vis 8. Des chevilles et pièces d'isolation contre l'effet galvanique, non représentées sur les dessins, peuvent ici aussi être mises en oeuvre.

Un système similaire d'extrémité peut être installé au niveau du faîte de la toiture.

Pour démonter le système d'étanchéité selon l'invention, il suffit de pratiquer à l'inverse du montage (figures 1 et 2), en desserrant les vis et, après avoir retiré le faîte 4, on accède à tous les autres éléments.

Tout le système repose sur une structure métallique qui supporte les modules. L'appui se fait par l'intermédiaire des dépressions des gouttières qui reposent, à leur tour, sur des supports 10 qui les isolent du contact direct avec les éléments métalliques, cet appui se faisant donc en douceur, en éliminant les bruits métalliques et en prévenant la corrosion.

En conclusion cette invention génère des plus-values en termes d'étanchéité des modules photovoltaïques et de facilité de montage; en outre elle entraîne un concept novateur de récupération de ressources.

En effet:
- le système est composé d'un nombre réduit de pièces simples et faciles à monter, il n'exige pas de connaissances particulières pour son installation et un utilisateur non spécialisé peut la réaliser;
- l'efficacité est plus grande que dans les solutions existantes, car on peut se dispenser de l'entretien régulier destiné à corriger l'usure produite dans les systèmes actuels due tant à l'introduction de saleté et d'humidité, qu'à la détérioration inhérente des éléments métalliques ou autres;
- le système permet la conduite et la récupération des eaux pluviales, en réponse à une préoccupation toujours plus grande des consommateurs actuels;
- le système empêche la corrosion galvanique des matériaux utilisés, grâce à la fixation et au serrage par lesquels les parties métalliques ne se touchent pas;
- le système est autoportant et universel (il est en fait adaptable à tous les types de modules photovoltaïques);
- il n'y a pas de sens particulier de montage à respecter, facilitant celui-ci;
- le système est adaptable à toute configuration de toiture, sans modification de charpente;
- ce système permet la continuité sans limite de longueur ou largeur et sans raccord;
- le système peut être mis en oeuvre pour des distances entre pannes supérieures à 3 m;
- le système peut être mis en oeuvre sur des toitures ayant des pentes à partir de 5° et peut être adapté pour des pentes allant jusqu'à 2 °;
- le système permet une très bonne ventilation des modules photovoltaïques;
- le système permet une pose très rapide et très simple, sans outils spéciaux.

La présente invention, telle qu'elle vient d'être décrite, est décrite dans les revendications et présente plus généralement les particularités et avantages suivants, qui peuvent être envisagés indépendamment les uns des autres, s'agissant notamment des particularités relatives aux pièces de montage destinées à être disposées dans le sens de la pente de la toiture et des pièces de montage destinées à être montées dans le sens des pannes de cette toiture:
1. La pièce de montage 2 positionnée sous les modules photovoltaïques 9, définie une gouttière destinée à être orientée dans le sens des pannes de la toiture. Sa configuration globalement est en forme de U, dont l'une des branches latérales 13 est prolongée par un retour 2a s'étendant vers la branche opposée pour former un moyen d'accrochage propre à coopérer avec un moyen d'accrochage 15 équipant un premier module photovoltaïque. Ensuite la gouttière forme entre l'extrémité libre du retour 2a et ladite branche opposée un logement 14 à la faveur duquel est destiné à être logé un moyen d'accrochage 15 d'un second module adjacent verticalement au premier module, en butée contre ce dernier.

Suivant des dispositions particulières, éventuellement combinées:
2. Le retour s'étend sensiblement sur la moitié de la largeur de la gouttière formée par la base 16 du U.
3. Le retour s'étend sensiblement parallèlement à la base du U, de préférence sur toute la longueur de la pièce.
4. Ladite branche opposée est prolongée par un rebord longitudinal 17, de préférence coplanaire avec le retour 2a.
5. La gouttière est évasée latéralement, sur ses deux côtés.
6. La gouttière se présente sous la forme d'une bande de métal pliée, de préférence de l'aluminium (ne présente pas une partie de l'invention telle que revendiquée).
7. Un dispositif pour le montage de modules photovoltaïques au sein d'une toiture, comportant une première pièce de montage 1, destinée à être fixée à la toiture dans le sens de la pente de celle-ci, et comportant une première et une seconde paroi latérale délimitant au moins une rigole 1 b et définissant chacune une surface d'appui pour l'un de deux modules photovoltaïques adjacents horizontalement. Ce dispositif comporte aussi une pièce 2 telle que définie supra en tant que pièce de montage complémentaire, et en ce que la surface d'appui de la première pièce sert en outre de support à cette pièce complémentaire, de sorte qu'elle débouche dans la ou l'une des rigoles de la première pièce.
8. La première pièce présente, suivant une configuration générale ondulée, deux rigoles reliées l'une à l'autre par une bande médiane 1c prévue pour la fixation de modules adjacents horizontalement à cette pièce.
9. Les rigoles présentent une section en forme de V, U ou trapézoïdale.
10. La bande médiane dépasse en hauteur l'extrémité libre des première et seconde parois latérales.
11. Le dispositif comporte des moyens de fixation par serrage des modules à la première pièce.
12. La première pièce et la pièce complémentaire sont chacune au nombre de deux par module.
13. Les première et seconde parois latérales sont chacune prolongées par un rebord longitudinal 1a.
14. Les moyens de fixation comportent au moins un mors et au moins un organe de serrage destiné à coopérer avec le mors et la première pièce pour serrer, entre eux, un bord de l'un au moins des modules adjacents horizontalement.
15. La bande est munie d'au moins un trou de passage d'un pied d'encliquetage d'une cheville 6, en matière non métallique, et muni d'un alésage, à la faveur duquel une vis formant organe de serrage vient coopérer avec la première pièce.
16. Chaque mors se présente sous la forme d'une plaquette 18 pourvue d'une partie centrale perforée pour le passage de la vis et prolongée par deux ailes 3b saillantes verticalement et formant chacune un épaulement tourné vers l'extérieur de la plaquette, pour coopérer avec le coin d'un module, du côté de celui-ci muni des cellules photovoltaïques.
17. La longueur de la vis est peut être telle qu'elle permet en outre l'assujettissement de la première pièce à une panne.
18. Le dispositif comporte une pièce d'isolation 10 en matière plastique, destinée à être interposée entre la première pièce et une panne 11.
19. Le dispositif comporte une baguette 4 propre à recouvrir la fente formée par deux modules horizontalement adjacents (et logeant de préférence les moyens de fixation), du côté de ces modules muni des cellules photovoltaïques.
20. La baguette comporte au moins une patte d'encliquetage 19 qui présente, transversalement, au moins un cran 4a et au moins une des ailes de chaque mors comportant, en correspondance, au moins un cran 3a sous lequel le cran de la patte d'encliquetage est apte à venir se prendre.
21. Le dispositif comporte en outre au moins une pièce 7 servant de bordure en rive de la toiture et/ou au moins une pièce servant de bordure en faîte de toiture. Chaque pièce étant adaptée à être fixée à une première pièce adjacente et/ou au moins une panne de la toiture.
22. Le dispositif comporte au moins une cale 12 destinée à être interposée entre une cheville et un mors sur chaque première pièce destinée à être agencée le long d'une rive de la toiture.
23. Les premières pièces sont agencées dans le sens de la pente de la toiture en sorte de se chevaucher sur une partie de leur longueur.

Selon un autre mode de réalisation représenté sur la figure 11, les rebords extérieurs 31a de la pièce de montage 31 (gouttière longitudinale ici) sont munis de cannelures anti-capillarité 40 sur leur côté formant surface d'appui pour les modules et les glissières transversales.

Ce mode de réalisation permet de supprimer les joints en caoutchouc, non représentés sur les figures et généralement mis en oeuvre entre les glissières transversales et ces rebords extérieurs, pour arrêter un écoulement d'eau susceptible d'atteindre la charpente.

Il permet en outre de mettre en oeuvre des glissières transversales sans pliage d'évasement 2b, 2c, du genre de celles portant le repère 32 sur la figure 12. En effet, les gouttes d'eau qui, en l'absence de pliage d'évasement, pourraient s'écouler le long du dessous de ces glissières transversales, sont arrêtées par ces cannelures en vue d'être évacuées dans la gouttière principale de la toiture.

Il en résulte une économie de temps, une réduction des coûts et une fiabilité accrue des glissières transversales.

Ces cannelures 40 se présentent, ici, sous la forme d'une structure plissée obtenue par pliage de la tôle métallique formant la gouttière 31. En pratique, il s'agit d'un pliage en forme de W au bord de chaque rigole 31b.

Ces cannelures sont ainsi au nombre de deux par rebord extérieur 31 a et s'étendent parallèlement l'une à l'autre, de préférence sur toute la longueur de ce rebord.

Chaque cannelure a, dans ce mode de réalisation, une profondeur du même ordre que l'épaisseur de la tôle formant la gouttière.

Un sillon 41 moins profond, s'étendant parallèlement à ces cannelures 40, entre celles-ci et le bord extérieur de chaque rebord 31 a, participe ici, à titre de sécurité complémentaire, à l'effet anti-capillarité procuré par ces cannelures.

Ainsi, selon un aspect original en soi, il est également prévu une pièce de montage destinée à être fixée à la toiture dans le sens de la pente de celle-ci, et comportant une première et une second paroi latérale délimitant au moins une rigole et ayant chacune un rebord extérieur formant surface d'appui pour l'un de deux modules photovoltaïques adjacents horizontalement, chaque rebord extérieur étant pourvu d'au moins une cannelure anti-capillarité s'étendant dans le sens de sa longueur du côté formant surface d'appui.

D'autres formes de cannelures peuvent bien entendu être envisagées (plusieurs rainures, par exemple en forme de V et s'étendant parallèlement l'une à l'autre,...).

Il peut être avantageusement également prévu, comme montré sur la figure 12, un organe de serrage 36 présentant un épaulement 42 de part et d'autre du trou de passage 43 de la vis de fixation des modules aux pannes, pour coopérer chacun avec le coin d'un module, du côté de celui-ci opposé à celui des cellules photovoltaïques. Les modules peuvent ainsi prendre appui sur ces épaulements 43 avec leurs bords longitudinaux, en plus de l'appui sur les rebords extérieurs des gouttières longitudinales, réduisant ainsi au minimum les risques de casse, en particulier lorsque les installateurs sont amenés à marcher sur les modules.

Ces épaulements 43 forment également une butée permettant de gagner du temps de montage en calant les modules et de limiter la déformation globale du système.

On notera également de cette figure 12 qu'une gouttière longitudinale 51 sans cannelure anti-capillarité peut être associée à des glissières transversales 32 dépourvues de pliages d'évasement. Les rebords extérieurs 51a de cette gouttière 51 sont; ici, pourvus de trous 52 de passage de moyens de fixation, par exemple, pour la fixation d'un faux-plafond.

On observera également que la pièce de fixation 33 est, dans le mode de réalisation de la figure 12, moins large que la pièce de fixation 3 du mode de réalisation des figures 1 à 10, en raison du rapprochement latéral des modules photovoltaïques résultant de la mise en oeuvre des épaulements sur l'organe de serrage 36.

Corollairement, des creusures 53 ont été ménagées dans la partie verticale de chacune des ailes 33b de cette pièce 33.

Bien entendu, la présente invention ne se limite pas aux formes de réalisation décrites et représentées, mais englobe toute variante d'exécution et/ou de combinaison de leurs divers éléments.

Ainsi, par exemple, les modules photovoltaïques peuvent être installés avec leur côté le plus long disposé suivant la direction des pannes de la toiture et non plus de la pente de celle-ci.

## Revendications

1. Pièce de montage (2) de modules photovoltaïques (9) au sein d'une toiture, définissant une gouttière destinée à être orientée dans le sens des pannes de la toiture, et ayant une configuration globalement en forme de U, dont l'une des branches latérales (13) est prolongée par un retour (2a) s'étendant vers la branche opposée pour former un moyen d'accrochage propre à coopérer avec un moyen d'accrochage (15) correspondant équipant un premier module photovoltaïque et la gouttière définissant entre l'extrémité libre du retour (2a) et ladite branche opposée un logement (14) à la faveur duquel est destiné à être logé un moyen d'accrochage (15) d'un second module adjacent verticalement au premier module, en butée contre ce dernier.

2. Pièce selon la revendication 1, **caractérisée en ce que** le retour s'étend sensiblement sur la moitié de la largeur de la gouttière formée par la base (16) du U et/ou
s'étend sensiblement parallèlement à la base du U, de préférence sur toute la longueur de la pièce.

3. Pièce selon l'une quelconque des revendications précédentes, **caractérisée en ce que** ladite branche opposée est prolongée par un rebord longitudinal (17).

4. Pièce selon l'une quelconque des revendications précédentes, **caractérisée en ce que** la gouttière est évasée latéralement, sur ses deux côtés.

5. Dispositif pour le montage de modules photovoltaïques au sein d'une toiture, comportant une première pièce de montage, destinée à être fixée à la toiture dans le sens de la pente de celle-ci, et comportant une première et une seconde paroi latérale délimitant au moins une rigole et définissant chacune une surface d'appui pour l'un de deux modules photovoltaïques adjacents horizontalement, dispositif **caractérisé en ce qu'**il comporte une pièce (2) selon l'une quelconque des revendications précédentes en tant que pièce de montage complémentaire, et **en ce que** la surface d'appui de la première pièce sert en outre de support à cette pièce complémentaire, de sorte qu'elle débouche dans la ou l'une des rigoles de la première pièce.

6. Dispositif selon la revendication 5, **caractérisé en ce que** la première pièce présente, suivant une configuration générale ondulée, deux rigoles reliées l'une à l'autre par une bande médiane (1c) prévue pour la fixation de modules adjacents horizontalement à cette pièce.

7. Dispositif selon la revendication 5 ou 6, **caractérisé en ce que** la bande médiane dépasse en hauteur l'extrémité libre des première et seconde parois latérales.

8. Dispositif selon l'une quelconque des revendications 5 à 7, **caractérisé en ce qu'**il comporte des moyens de fixation par serrage des modules à la première pièce, de préférence au moins un mors et au moins un organe de serrage destiné à coopérer avec le mors et la première pièce pour serrer, entre eux, un bord de l'un au moins des modules adjacents horizontalement.

9. Dispositif selon l'une quelconque des revendications 5 à 8, **caractérisé en ce que** les première pièce et pièce complémentaire sont chacune au nombre de deux par module.

10. Dispositif selon l'une quelconque des revendications 5 à 8, **caractérisé en ce que** les première et seconde parois latérales sont chacune prolongées par un rebord longitudinal (1a).

11. Dispositif selon la revendication 6, **caractérisé en ce que** la bande est munie d'au moins un trou de passage d'un pied d'encliquetage d'une cheville, en matière non métallique, et muni d'un alésage, à la faveur duquel une vis formant organe de serrage vient coopérer avec la première pièce.

12. Dispositif selon la revendication 8, **caractérisé en ce que** chaque mors, de préférence en matière non métallique, se présente sous la forme d'une plaquette (18) pourvue d'une partie centrale perforée pour le passage de la vis et prolongée par deux ailes (3b) saillantes verticalement et formant chacune un épaulement tourné vers l'extérieur de la plaquette, pour coopérer avec le coin d'un module, du côté de celui-ci muni des cellules photovoltaïques.

13. Dispositif selon l'une quelconque des revendications 5 à 12, **caractérisé en ce qu'**il comporte au moins une pièce d'isolation (10) en matière plastique, destinée à être interposée entre la première pièce longitudinale et une panne (11).

14. Dispositif selon la revendication 8, **caractérisé en ce qu'**il comporte une baguette (4) propre à recouvrir la fente formée par deux modules horizontalement adjacents, du côté de ces modules muni des cellules photovoltaïques, laquelle baguette comporte, de préférence, au moins une patte d'encliquetage (19) qui présente, transversalement, au moins un cran (4a) et au moins une aile de chaque mors comportant, en correspondante, au moins un cran (3a) sous lequel la cran de la patte d'encliquetage est apte à venir se prendre.

15. Dispositif selon l'une quelconque des revendications 5 à 14, **caractérisé en ce qu'**il comporte en outre au moins une pièce (7) servant de bordure en rive de la toiture et/ou au moins une pièce servant de bordure en faîte de toiture, chaque pièce étant adaptée à être fixée à une première pièce adjacente et/ou au moins une panne de la toiture.

16. Dispositif selon les revendications 8 et 11, **caractérisé en ce qu'**il comporte au moins une cale (12) destinée à être interposée entre la cheville et un mors sur chaque première pièce destinée à être agencée le long d'une rive de la toiture.

17. Dispositif selon la revendication 8, **caractérisé en ce que** l'organe de serrage comporte, pour chacun des modules adjacents horizontalement, un épaulement destiné à recevoir un coin inférieur de l'un de ces modules.

18. Dispositif selon l'une quelconque des revendications 5 à 17. **caractérisé en ce que** chaque surface d'appui présente au moins une cannelure anti-capillarité s'étendant dans le sens de la longueur de la surface d'appui.

19. Toiture comportant un dispositif de montage selon l'une quelconque des revendications 5 à 18, sur laquelle les premières pièces sont agencées dans le sens de la pente de la toiture en sorte de se chevaucher sur une partie de leur longueur.

## Patentansprüche

1. Installationsteil (2) zum Installieren von photovoltaischen Modulen (9) an einer Bedachung, das eine Regenrinne definiert, die dazu bestimmt ist, in Richtung der Dachpfetten der Bedachung ausgerichtet zu werden, und das eine insgesamt U-förmige Gestalt aufweist, von der einer der Seitenschenkel (13) sich über einen Rücksprung (2a) fortsetzt, der sich zum entgegengesetzten Schenkel hin erstreckt, um ein Verhakungsmittel zu bilden, das geeignet ist, mit einem entsprechenden Verhakungsmittel (15) zusammenzuwirken, mit dem ein erstes photovoltaisches Modul ausgestattet ist, wobei die Regenrinne zwischen dem freien Ende des Rücksprungs (2a) und dem entgegengesetzten Schenkel eine Aufnahme (14) definiert, mit deren Hilfe ein Verhakungsmittel (15) eines zweiten Moduls, das vertikal an das erste Modul angrenzt, in Anschlag an letzterem aufgenommen werden soll.

2. Teil nach Anspruch 1,
**dadurch gekennzeichnet, dass** der Rücksprung sich im Wesentlichen über die halbe Breite der Regenrinne erstreckt, die von der Basis (16) der U-Form gebildet wird, und/ oder
sich im Wesentlichen parallel zur Basis der U-Form, vorzugsweise über die gesamte Länge des Teils, erstreckt.

3. Teil nach einem der vorangehenden Ansprüche,
**dadurch gekennzeichnet, dass** der entgegengesetzte Schenkel sich über eine longitudinal verlaufende Randleiste (17) fortsetzt.

4. Teil nach einem der vorangehenden Ansprüche,
**dadurch gekennzeichnet, dass** die Regenrinne auf ihren beiden Seiten seitlich erweitert ist.

5. Vorrichtung zum Installieren von photovoltaischen Modulen an einer Bedachung, enthaltend ein erstes Installationsteil, das dazu bestimmt ist, an der Bedachung in Richtung der Neigung derselben befestigt zu werden, sowie eine erste und eine zweite Seitenwand, die zumindest eine Ablaufrinne begrenzen und jeweils eine Abstützfläche für eines der beiden horizontal aneinandergrenzenden, photovoltaischen Module definieren, welche Vorrichtung **dadurch gekennzeichnet, dass** sie ein Teil (2) nach einem der vorangehenden Ansprüche als komplementäres Installationsteil aufweist und dass die Abstützfläche des ersten Teils ferner als Träger für dieses komplementäre Teil dient, so dass es in die bzw. einer der Ablaufrinnen des ersten Teils mündet.

6. Vorrichtung nach Anspruch 5,
**dadurch gekennzeichnet, dass** das erste Teil gemäß einer allgemein wellenförmigen Gestalt zwei Ablaufrinnen aufweist, die über einen Mittelstreifen (1c) miteinander verbunden sind, der für die Befestigung der horizontal aneinandergrenzenden Module an dieses Teil vorgesehen ist.

7. Vorrichtung nach Anspruch 5 oder 6,
**dadurch gekennzeichnet, dass** der Mittelstreifen in der Höhe das freie Ende der ersten und der zweiten Seitenwand übersteht.

8. Vorrichtung nach einem der Ansprüche 5 bis 7,
**dadurch gekennzeichnet, dass** sie Mittel zum Befestigen der Module durch Verspannen mit dem ersten Teil aufweist, vorzugsweise zumindest eine Spannbacke und zumindest ein Spannglied, das dazu bestimmt ist, mit der Spannbacke und dem ersten Teil zusammenzuwirken, um zwischen einander einen Rand zumindest des einen der horizontal aneinandergrenzenden Module einzuspannen.

9. Vorrichtung nach einem der Ansprüche 5 bis 8,
**dadurch gekennzeichnet, dass** das erste Teil und das komplementäre Teil jeweils in einer Anzahl von zwei pro Modul vorliegen.

10. Vorrichtung nach einem der Ansprüche 5 bis 8,
**dadurch gekennzeichnet, dass** die erste und die zweite Seitenwand sich jeweils über eine longitudinal verlaufende Randleiste (1a) fortsetzen.

11. Vorrichtung nach Anspruch 6,
**dadurch gekennzeichnet, dass** der Streifen mit zumindest einem Durchgangsloch für den Durchtritt eines Rastkopfes eines Dübels versehen ist, der aus nichtmetallischem Material besteht und mit einer Bohrung versehen ist, mit deren Hilfe eine Schraube, die als Spannglied dient, mit dem ersten Teil zusammenwirkt.

12. Vorrichtung nach Anspruch 8,
**dadurch gekennzeichnet, dass** jede Spannbacke, vorzugsweise aus nichtmetallischem Material, in Form einer Platte (18) vorliegt, die mit einem perforierten Mittelabschnitt für den Durchtritt der Schraube versehen ist und sich über zwei vertikal abstehende Flügel (3b) fortsetzt, die jeweils eine nach außerhalb der Platte gerichtete Schulter bilden, um mit der Ecke eines Moduls auf dessen Seite zusammenzuwirken, die mit den photovoltaischen Zellen ausgestattet ist.

13. Vorrichtung nach einem der Ansprüche 5 bis 12,
**dadurch gekennzeichnet, dass** sie zumindest ein Isolierteil (10) aus Kunststoffmaterial aufweist, das dazu bestimmt ist, zwischen das erste longitudinal verlaufende Teil und eine Dachpfette (11) eingesetzt zu werden.

14. Vorrichtung nach Anspruch 8,
**dadurch gekennzeichnet, dass** sie einen Steg (4) aufweist, der geeignet ist, den von zwei horizontal aneinandergrenzenden Modulen gebildeten Spalt auf derjenigen Seite dieser Module zu überdecken, die mit den photovoltaischen Zellen ausgestattet ist, welcher Steg vorzugsweise zumindest eine Rastlasche (19) aufweist, die in Querrichtung zumindest eine Raste (4a) enthält, wobei zumindest ein Flügel von jeder Spannbacke entsprechend zumindest eine Raste (3a) enthält, unter welcher sich die Raste der Rastlasche verhaken kann.

15. Vorrichtung nach einem der Ansprüche 5 bis 14,
**dadurch gekennzeichnet, dass** sie ferner zumindest ein Teil (7) aufweist, das als Ortgangkante der Bedachung dient, und/oder zumindest ein Teil, das als Firstkante der Bedachung dient, wobei jedes Teil dazu geeignet ist, an ein erstes angrenzendes Teil und/oder an zumindest eine Dachpfette befestigt zu werden.

16. Vorrichtung nach Ansprüche 8 und 11,
**dadurch gekennzeichnet, dass** sie zumindest einen Keil (12) aufweist, der dazu bestimmt ist, zwischen Dübel und Spannbacke an jedem ersten Teil eingefügt zu werden, das dazu bestimmt ist, entlang eines Ortgangs der Bedachung angeordnet zu werden.

17. Vorrichtung nach Anspruch 8,
**dadurch gekennzeichnet, dass** das Spannglied für jedes der horizontal aneinandergrenzenden Module eine Schulter aufweist, die dazu bestimmt ist, eine untere Ecke eines dieser Module aufzunehmen.

18. Vorrichtung nach einem der Ansprüche 5 bis 17,
**dadurch gekennzeichnet, dass** jede Abstützfläche zumindest eine Vertiefung zum Schutz vor Kapillarwirkung aufweist, die sich in Richtung der Länge der Abstützfläche erstreckt.

19. Bedachung mit einer Installationsvorrichtung nach einem der Ansprüche 5 bis 18, auf der die ersten Teile in Richtung der Dachneigung so angeordnet sind, dass sie sich über einen Teil ihrer Länge überlappen.

## Claims

1. Part (2) for mounting photovoltaic modules (9) in a roof, defining a channel intended to be oriented in the direction of the roof purlins, and having a configuration roughly in the form of a U, one of the lateral arms (13) of which is extended by a return (2a) extending towards the opposite arm in order to form an attachment means able to cooperate with a corresponding attachment means (15) equipping a first photovoltaic module, and the channel defining, between the free return end (2a) and said opposite arm, a housing (14) by means of which a means (15) of attaching a second adjacent module vertically to the first module, in abutment against the latter, is intended to be housed.

2. Part according to claim 1, **characterised in that** the return extends substantially over half the width of the channel formed by the base (16) of the U and/or
extends substantially parallel to the base of the U, preferably over the entire length of the part.

3. Part according to any one of the preceding claims, **characterised in that** said opposite arm is extended by a longitudinal rim (17).

4. Part according to any one of the preceding claims, **characterised in that** the channel is splayed laterally, on both sides.

5. Device for mounting photovoltaic modules in a roof, comprising a first mounting part, intended to be fixed to the roof in the direction of the slope thereof, and comprising first and second lateral walls delimiting at least one groove and each defining a support surface for one of the two horizontally adjacent photovoltaic modules, a device **characterised in that** it comprises a part (2) according to any one of the preceding claims as a complementary mounting part, and **in that** the support surface of the first part also serves as a support for this complementary part, so that it emerges in the or one of the grooves of the first part.

6. Device according to claim 5, **characterised in that** the first part has, in a roughly corrugated configuration, two grooves connected to each other by a middle band (1c) provided for fixing horizontally adjacent modules to this part.

7. Device according to claim 5 or 6, **characterised in that** the middle band projects in height beyond the free end of the first and second lateral walls.

8. Device according to any one of claims 5 to 7, **characterised in that** it comprises means of fixing the modules by clamping to the first part, preferably at least one jaw and at least one clamping member intended to cooperate with the jaw and the first part in order to clamp together an edge of at least one of the horizontally adjacent modules.

9. Device according to any one of claims 5 to 8, **characterised in that** the first part and the complementary part are each two in number per module.

10. Device according to any one of claims 5 to 8, **characterised in that** the first and second lateral walls are each extended by a longitudinal rim (1a).

11. Device according to claim 6, **characterised in that** the band is provided with at least one passage hole for a foot for snapping in a peg, made from non-metallic material, and provided with a bore, by means of which a screw forming a clamping member cooperates with the first part.

12. Device according to claim 8, **characterised in that** each jaw, preferably made from non-metallic material, is in the form of a tip (18) provided with a central part perforated for the screw to pass and extended by two wings (3b) projecting vertically and each forming a shoulder turned towards the outside of the of the tip, in order to cooperate with the corner of a module, on the side thereof provided with the photovoltaic cells.

13. Device according to any one of claims 5 to 12, **characterised in that** it comprises at least one isolation piece (10) made from plastics material, intended to be interposed between the first longitudinal part and a purlin (11) .

14. Device according to claim 8, **characterised in that** it comprises a rod (4) able to cover the slot formed by two horizontally adjacent modules, on the side of these modules provided with the photovoltaic cells, said rod preferably comprising at least one snapping-in lug (19) that has transversely at least one notch (4a) and at least one wing of each jaw comprising, in correspondence, at least one notch (3a) under which the notch of the snapping-in lug is able to engage.

15. Device according to any one of claims 5 to 14, **characterised in that** it also comprises at least one part (7) serving as a border on the edge of the roof and/or at least one part serving as a border at the roof ridge, each part being adapted to be fixed to a first adjacent part and/or to at least one roof purlin.

16. Device according to claims 8 and 11, **characterised in that** it comprises at least one shim (12) intended to be interposed between the peg and a jaw on each first part intended to be arranged along an edge of the roof.

17. Device according to claim 8, **characterised in that** the clamping member comprises, for each of the horizontally adjacent modules, a shoulder intended to receive a bottom corner of one of these modules.

18. Device according to any one of claims 5 to 17, **characterised in that** each support surface has at least one anti-capillarity flute extending in the direction of the length of the support surface.

19. Roof comprising a mounting device according to any one of claims 5 to 18, on which the first parts are arranged in the direction of the slope of the roof so as to overlap over part of their length.
